# EUROPÄISCHE PATENTSCHRIFT

(11) **EP 2 043 763 B1**
(45) Veröffentlichungstag und Bekanntmachung des Hinweises auf die Patenterteilung: **07.04.2010**
(21) Anmeldenummer: 07787310.7
(22) Anmeldetag: 10.07.2007
(51) Int. Cl.: B01D 53/04, B01J 47/00, B01J 47/04

(54) **ADSORPTIVES FILTERMATERIAL**
ADSORPTIVE FILTER MATERIAL
MATÉRIAU DE FILTRAGE ADSORBANT

(30) Priorität: 20.07.2006 DE 102006033541
(43) Veröffentlichungstag der Anmeldung: 08.04.2009
(73) Patentinhaber: Artemis Control AG, 8610 Uster (CH)
(72) Erfinder: KAMES, Jost, 8635 Dürnten (CH)
(74) Vertreter: Rach, Werner
(86) Internationale Anmeldenummer: PCT/EP2007/057035
(87) Internationale Veröffentlichungsnummer: WO 2008/009588

(56) Entgegenhaltungen:
- EP-A- 0 991 470
- DE-A1- 19 834 311
- US-A- 5 797 979
- US-A1- 2005 211 625

## Beschreibung

### Gebiet der Erfindung

Die vorliegende Erfindung betrifft allgemein ein Material mit adsorbierenden Eigenschaften. Insbesondere betrifft die Erfindung ein solches Material für Säuren und Säurebildner. Die Erfindung betrifft weiterhin aus diesem Material hergestellte Filterkörper.

### Hintergrund der Erfindung, Stand der Technik

Die Entfernung von Säurespuren oder Säurebildnern als unerwünschte Beimengung zu Luft ist von zentraler Bedeutung in vielen industriellen Anwendungen sowie Anwendungen im Bereich Objekt- und Personenschutz.

Säuren und Säurebildner entwickeln auf Oberflächen korrodierende oder generell zerstörende Wirkungen, welche das gesamte Objekt beeinträchtigen oder dauerhaft zerstören können.

Ein Beispiel für einen Säurebildner ist z.B. das aus der Verbrennung fossiler Brennstoffe herrührende Schwefeldioxid, welches in die Atmosphäre entlassen und anschließend mit der Frischluft in verdünnter Form in Gebäude eingesogen wird.

An Oberflächen und in Feuchtigkeitsfilmen wandelt sich Schwefeldioxid in schweflige Säure, später in Schwefelsäure um. In Verbindung mit Ammoniak als basischer Substanz kommt es zur Salzbildung, die beispielsweise in der Form von Ammoniumsulfat-Kristalliten auf der Oberfläche von optischen Einheiten, wie Belichtungsmasken in der Halbleiterherstellung, erhebliche Beeinträchtigungen im Fertigungsprozess hervorrufen kann.

Beispiele für Säuren sind Chlorwasserstoff (HCl) und Fluorwasserstoff (HF), die metallische und nichtmetallische Oberflächen angreifen. So bspw. der Angriff von Fluorwasserstoff HF auf Glasfaserstrukturen, wie sie typischerweise in Schwebstofffiltern zur Partikelfiltration in Reinräumen eingesetzt werden. Fluorwasserstoff wandelt Bor-Bestandteile der Glasstruktur teilweise in flüchtiges Bortrifluorid um, welches in die Raumluft entweicht und zu unerwünschten Dotierungsschritten im Fertigungsprozess von Silizium-basierten Halbleiterstrukturen führen kann.

Als Beispiele für geschädigte Objekte sind metallische oder halbleitende Strukturen und Substratoberflächen im Bereich der Halbleiterherstellung und -verarbeitung sowie die Oberflächen von Objekten mit mineralischer Zusammensetzung zu nennen, so etwa Objekte aus Marmor oder Emaille als Gebrauchs- oder Kunstobjekte.

Ein weiterer Bereich, in dem Säuren bzw. Säurebildner auftreten können, ist derjenige der Atemluft bzw. des Atemschutzes bezogen auf die Inhalation saurer, ätzender Gase, etwa im Brand- und Katastrophenfall. Ein typisches Beispiel ist die Freisetzung von Chlorwasserstoff HCl bei der Verbrennung chlorhaltiger Kunststoffe, etwa Polyvinylchlorid (PVC).

Es wurden verschiedene Verfahren beschrieben, um Säuren und Säurebildner aus Luftströmen zu entfernen.

Die meisten Verfahren nach dem Stand der Technik verwenden Sorptionsmaterialien auf der Basis von unmodifizierter oder chemisch modifizierter Aktivkohle, an deren Oberflächen eine Zwischenspeicherung der sauren Gase stattfindet und über chemische Umwandlungen stabile, nicht mehr freisetzbare Stoffe entstehen sollen.

Ein Nachteil der Sorption an Aktivkohlen ist immer, dass für eine wirksame Funktion eine präzise Abstimmung des Gehaltes an chemisch aktiver Oberflächenbeschichtung zum Gesamtporenvolumen unter idealen Bedingungen von Temperatur und Feuchte erfolgen muss, um die beschriebene Abscheideleistung wirksam werden zu lassen. Darüber hinaus ist es bei Aktivkohlesystemen unvermeidlich, dass durch die Porenstruktur eine unerwünschte Mit-Adsorption etwa von organischen, hydrophobisierenden Substanzen erfolgt, die die Aufnahmefähigkeit für Säuren zumindest reduziert, häufig jedoch komplett unterbindet und sich einer Vorhersage und Leistungssteuerung entzieht.

Nachteilig bei der Sorption an Aktivkohlen ist weiterhin, dass diese ein Mehrschritt-Prozess aus Transport an das Aktivkohlekorn, Migration in Poren, Zwischenanlagerung und chemischer Reaktion ist. Dieser Prozess ist thermodynamisch durch die Reaktionsenthalpie unterstützt, jedoch an einigen Punkten der Kette von Seiten der Transportkinetik nur langsam möglich, was in Konsequenz häufig zu geringen Sorptionsleistungen führt.

Zudem hat sich herausgestellt, dass unerwünschte, nicht kontrollierbare Reaktionen auf den Kohleoberflächen ablaufen können, die durch den Vorgang der Oberflächenreaktion eine Umwandlung von gering oder nicht aktiven Substanzen in höher oxidierte, korrosive Substanzen bewirken. Ein Beispiel hierfür ist die teilweise Umwandlung von Stickstoffdioxid NO₂ an Aktivkohlen in salpetrige Säure HNO₂.

Die EP 0 991 470 B1 beschreibt einen Filter für Reinluft zur Reinigung von Luftströmen von gasförmigen sauren Stoffen, wie zum Beispiel Schwefeldioxid, oder von Ammoniak, enthaltend einen hoch luftdurchlässigen dreidimensionalen Träger, an dem Ionenaustauscherkügelchen fixiert sind, wobei der Träger ein großporiger, retikulierter Polyolefinschaum ist, und die Haftung der Ionenaustauscherkügelchen durch Erhitzen zustande kommt. Die Ionenaustauscherkügelchen können entweder stark basische Anionenaustauscher oder stark saure Kationenaustauscher sein.

In der WO 01/70391 wird ein Filtermaterial mit adsorbierenden Eigenschaften offenbart, bestehend aus einer Trägerschicht und einer ersten, mit der Trägerschicht verbundenen adsorbierenden Schicht. Zusätzlich wiest das Filtermaterial eine zweite oder zweite und dritte adsorbierende Schicht auf, wobei alle adsorbierenden Schichten eine Gesamtadsorbenzienauflage bilden. Eine oder zwei der adsorbierenden Schichten besteht bevorzugt aus imprägniertem Aktivkohlematerial. Ebenfalls eine oder zwei der adsorbierenden Schichten bestehen bevorzugt aus Ionenaustauschermaterialien. Der Einsatz der Ionenaustauscher bewirkt dabei eine besonders vorteilhafte Verlängerung der Standzeiten bei hohen Effizienzen der Filtermaterialien.

Nachteile der in diesen Dokumenten beschriebenen Techniken liegen einerseits in den bereits aufgezeigten Nachteilen der Aktivkohleanteile in den Materialien. Zum anderen zeigen schwach basischer Anionentauscher eine mangelnde Leistungsfähigkeit zur Bindung von Säurebildnern wie etwa Schwefeldioxid (SO₂). Stark basische, OH-haltige Anionentauscher zeigen eine chemische und thermische Labilität, da sie flüchtige Aminoverbindungen aus einer unaufhaltsamen Degradation des Polymergerüstes freisetzen.

Die oben beschriebenen Nachteile bewirken, dass sich die beschriebenen Materialien nicht zur geforderten breitbandigen Entfernung von Säuren oder Säurebildner einsetzen lassen. Ein weiterer Nachteil liegt in der Freisetzung von Aminoverbindungen als starken Geruchsträgern, die den Einsatz der Materialien insbesondere in Lüftungsanlagen bewohnter Gebäude oder Produktionsstätten unmöglich machen.

Diese Freisetzung verhindert somit die Anwendung der beschriebenen Materialien sowohl im Bereich des Atemschutzes als auch im Bereich der Halbleiterherstellung, wo aufgrund dieser Stofffreisetzung Prozessstörungen auftreten können.

### Zusammenfassung der Erfindung

Es ist daher die Aufgabe der vorliegenden Erfindung, ein Material bereit zu stellen, das mit hoher Absorptionseffizienz aufgrund schneller Transportvorgänge Säuren und Säurebildner aus der Luft bindet.

Eine weitere Aufgabe der vorliegenden Erfindung liegt darin, ein solches Material bereit zu stellen, das den heutigen hohen Anforderungen an Reinluft gerecht wird.

Diese und weitere Aufgaben werden durch das Filtermaterial gemäß Anspruch 1 gelöst. Weitere vorteilhafte Ausgestaltungen sind in den Unteransprüchen dargelegt.

### Detaillierte Beschreibung der Erfindung

Erfindungsgemäß enthält das Filtermaterial mindestens 60% eines stark basischen quaternären Anionenaustauschers in der gezielt herstellbaren Hydrocarbonat-Form sowie einen Anteil von nicht mehr als 15% eines Kationenaustauschers in der H-Form.

Diese Materialien weisen eine hohe Wirksamkeit bei der Filtration von Säuren und Säurebildnern auf, ohne die Nachteile in der Freisetzung von Spurenstoffen oder der unerwünschten Bildung von Stoffen zu zeigen.

In einer bevorzugten Ausführungsform hat das Material einen Wassergehalt von 25% gebunden in der Polymermatrix (Ionenaustauscher), wobei die beschriebene chemisorptive Funktion auch bei Feuchtegehalten von 20% oder 40% wahrgenommen wird.

Die so beschriebenen erfindungsgemäßen Materialien des Ionenaustauschers weisen vorteilhafterweise mittlere Korndurchmesser von 0,5 - 0,8 mm auf, wobei Materialien mit mittleren Korndurchmessern von 0,5 - 0,6 mm besonders bevorzugt sind.

Ein erfindungsgemäßes Beispiel ist ein Material, welches als Gemisch von 68% Anionentauscher in der Hydrogencarbonat-Form, 17% Anionentauscher in der Hydroxid-Form und 15% Kationenaustauscher in der H-Form vorliegt. Das Gemisch weist einen Wasseranteil von 25% auf, bezogen auf das Gesamtgewicht des Ionenaustauschers, als es zur Untersuchung der Leistungsfähigkeit eingesetzt wurde. Das beschriebene Material war vollkommen geruchlos.

Eine Materialprobe wurde in Form einer 1 cm hohen Schüttung in einer Prüfapparatur, bspw. eine Sorptionskolonne zur Untersuchung der Abscheideleistung unter dynamischen, d.h., durchströmten bedingungen, einem Abscheidetest auf Schwefeldioxid hin unterzogen. Dabei wurde ein Gemisch von 20 ppmv Schwefeldioxid in reiner Luft bei einem Luftzustand von 50% relativer Feuchte bei 23°C durch die Materialprobe geleitet. Die Bettwechselrate betrug 122.000 Bettwechsel pro Stunde.

Die Abscheideeffizienz des beschriebenen Materials für Schwefeldioxid betrug 92% und hielt für mehr als 120 Minuten bei über 90% an.

Ein weiteres erfindungsgemäßes Material wurde als Gemisch von 89% des Anionentauschers in der Hydrogencarbonat-Form, sowie 11% des Kationentauschers in der H-Form hergestellt. Der mittlere Wassergehalt des Polymergemisches betrug 26% bezogen auf die Gesamtmasse. Die Materialprobe wurde in eine Sorptionskolonne in einer 1 cm hohen Schüttung eingebracht, mit Prüfluft bei einer Geschwindigkeit von 0,7 m/s, 23 °C und 50% relativer Feuchte angeströmt und der Prüfluft 10 ppmv Schwefeldioxid beigemischt. Der Anfangsabscheidegrad der so hergestellten Materialprobe lag bei größer 95%.

Die erfindungsgemäßen Materialien werden zur Erzielung der vollen Leistungsfähigkeit bevorzugt in Stützstrukturen eingebracht. Diese können bspw. dargestellt sein durch einen retikulierten offenzelligen Polymerschaum auf Basis von PE-PU oder Polyether, auf den ein Klebefilm aufgebracht wurde.

Ein Beispiel für ein solches erfindungsgemäßes Material wurde hergestellt, indem eine 20 mm starke Platte eines retikulierten PE-Polyurethan-Schaumes zunächst mit einem Zweikomponenten-PU-Reaktiv-Kleber benetzt wurde, so dass alle Stege an der Oberfläche und der Tiefe des Materials mit einem Klebefilm benetzt waren. Dann wurde das Material, ein Gemisch von 68% Anionentauscher in der Hydrogencarbonat-Form, 17% Anionentauscher in der Hydroxid-Form und 15% Kationenaustauscher in der H-Form, in die Struktur eingestreut und durch die Anhaftung am PE-PU-Schaum fixiert. Nach der Aushärtephase des Klebers enthielt die Schaumplatte, unter Einbeziehung des Restwassergehaltes, ca. 2.800 g/m² des Ionentauschergemisches.

Das so beschriebene Filtermaterial wurde einem Leistungstest in einer Reinraumumgebung unterzogen.

Eine kassettenförmig ausgebildete Filterkomponente wurde auf die Rohluftseite einer Filterdecke aufgelegt. Die Luftströmung durch die Komponente setzte sich in einer Durchströmungsgeschwindigkeit des Mischbettes von 1 m/s um. In der beispielhaften Anwendung wurde das Abscheideverhalten für Komponenten in der Rohluft untersucht, die folgende mittlere Konzentrationen aufwiesen: Schwefeldioxid 0,5 ppbv, Stickstoffdioxid 6,1 ppbv, Chlorwasserstoff 0,2 ppbv.

Für Schwefeldioxid wurde eine Abscheideleistung von mehr als 80% gefunden, für Chlorwasserstoff eine Leistung von mehr als 75%, während Stickstoffdioxid statistisch nicht signifikant abgeschieden wurde. Der Einsatz der Filterkomponente erfolgte ohne Störungen des Prozesses durch Abwehung von Geruchsstoffen. Eine weitere bevorzugte Applikationsform besteht in der Einbringung ein eine textile Filterstruktur, etwa fixiert zwischen einem Träger- und Abdeckvlies an einer mikrofeinen Struktur von Verbindungsfasern.

In einem Beispiel wurde eine erfindungsgemäße Mischung des Materials von 70% Anionentauscher in der Hydrogencarbonat-Form, 17% Anionentauscher in der Hydroxid-Form und 13% Kationenaustauscher in der H-Form in rieselfähiger Form mit einem Restwassergehalt von 28% hergestellt. Dieses Material wurde in einem Verarbeitungsprozess in Form einer ca. 1,6 mm starken Schichtung auf einen textilen Träger aufgebracht, durch feinste Fäden aus einem reaktiven Klebstoff innerhalb der Schüttung fixiert und mit einem offenen Vliesstoff dauerhaft abgedeckt.

Das so entstandene Filter-Verbundmaterial, welches einen Gehalt von 540 - 560 g/m² des Mischbettes aufwies, wurde einem Test der Abscheideleistung für säurebildende Gase unterworfen.

Hierzu wurde eine Materialprobe in einer Testapparatur mit einem Gemisch von 10 ppmv Schwefeldioxid in reiner Luft bei einem Luftzustand von 50% relativer Feuchte bei 23°C und einer Anströmgeschwindigkeit von 7 cm/s durchströmt. Die Materialprobe wies eine Abscheideleistung von 93,5% auf, welche über 90 Minuten unvermindert anhielt.

In einem weiteren Versuch wurde eine gleichartige Materialprobe in der beschriebenen Testapparatur mit einem Gemisch von 10 ppmv Stickstoffdioxid in reiner Luft bei einem Luftzustand von 50% relativer Feuchte bei 23°C und einer Anströmgeschwindigkeit von 7 cm/s durchströmt. Die Materialprobe zeigte keine Abscheideleistung für Stickstoffdioxid, sowie keine Bildung von salpetriger Säure oder Salpetersäure, sowie Stickstoffmonoxid, was ein gewünschtes Verhalten darstellte.

In einem weiteren Beispiel wurde das so beschriebene Filter-Verbundmaterial mit einem Gehalt von 550 ± 20 g/m² des Mischbettes in Form einer Faltstruktur zu einer Filterkomponente für die Anwendung in Reinraumprozessen verbaut.

Die beispielhaft beschriebene Komponente enthielt das Material in Form eines 60 mm hoch plissierten Faltenpaketes, bei dem der Abstand der Faltenspitzen durch Hilfsmittel gleichmäßig auf 9 mm eingestellt war.

Die so beschriebene kassettenförmig ausgebildete Filterkomponente wurde auf die Rohluftseite einer Filterdecke aufgelegt. Die Luftströmung durch die Komponente setzte sich in einer Durchströmungsgeschwindigkeit des Mischbettes von 5 cm/s um. In der beispielhaften Anwendung wurde das Abscheideverhalten für Komponenten in der Rohluft untersucht, die folgende mittlere Konzentrationen aufwiesen:

Schwefeldioxid 0,8 ppbv, Stickstoffdioxid 5,2 ppbv, Chlorwasserstoff 0,2 ppbv.

Für Schwefeldioxid wurde eine Abscheideleistung von mehr als 90% gefunden, für Chlorwasserstoff eine Leistung von mehr als 85%, während Stickstoffdioxid statistisch nicht signifikant abgeschieden wurde. Der Einsatz der Filterkomponente erfolgte ohne Störungen des Prozesses durch Abwehung von Geruchsstoffen.

In einem weiteren Beispiel wurde eine erfindungsgemäße Mischung des Materials von 75% Anionentauscher in der Hydrogencarbonat-Form, 10% Anionentauscher in der Hydroxid-Form und 15% Kationenaustauscher in der H-Form in rieselfähiger Form mit einem Restwassergehalt von 25% hergestellt. In einem Textildruckprozess wurde ein offenmaschiges, fixiertes Gewebe (Stütznetz) mit rechteckigen Öffnungen von ca. 2 mm Durchlassweite mit Klebepunkten eines PU-Reaktivhotmelt-Klebers bedruckt. Unmittelbar danach wurde die erfindungsgemäße Mischung aufgerieselt, wobei die Sorbentspartikel an den Kleberpunkten in einer Monolage fixiert wurden. Das so entstandene extrem luftdurchlässige Flächengebilde hatte eine Sorbentsauflage von 250 ± 30 g/m² bei einer Dicke von 1,2 mm. Von dem Material wurden Prüfrondelle von 105 mm Durchmesser ausgestanzt, in drei Lagen aufeinandergelegt und ein einer Prüfapparatur eingespannt. Der Leistungstest wurde bei einer Durchströmungsgeschwindigkeit von 2 cm/s mit einem Gemisch von 5 ppmv Schwefeldioxid in Luft durchgeführt, wobei der Luftzustand 23°C bei 50% relativer Feuchte betrug. Die Abscheideleistung für Schwefeldioxid betrug 97%.

## Patentansprüche

1. Adsorptives Filtermaterial zur Adsorption von Säuren und Säurebildnern aus Luft, enthaltend ein Ionenaustauschermaterial, **dadurch gekennzeichnet, dass** das Ionenaustauschermaterial besteht aus:
a) einem Anteil von mindestens 60% eines stark basischen Anionenaustauschers in der Hydrogencarbonat-Form; und
b) einem Anteil von nicht mehr als 15% eines Kationenaustauschers in der H-Form.

2. Adsorptives Filtermaterial nach Anspruch 1, **dadurch gekennzeichnet, dass** es zusätzlich einen Anteil von weniger als 20% des Ionenaustauschers in der Hydroxid-Form enthält.

3. Filtermaterial nach Anspruch 1 oder 2, **dadurch gekennzeichnet, dass** das Material einen Wassergehalt von 20 - 40%, gebunden in der Polymermatrix aufweist.

4. Filtermaterial nach einem der vorstehenden Ansprüche, **dadurch gekennzeichnet, dass** das Ionenaustauschermaterial in Kugel- oder Faserform vorliegt.

5. Filtermaterial nach Anspruch 4, **dadurch gekennzeichnet, dass** die Kugeln einen mittleren Durchmesser von 0,5 - 0,8 mm aufweisen.

6. Filtermaterial nach einem der vorstehenden Ansprüche, **dadurch gekennzeichnet, dass** es besteht aus
a) 68% stark basischer Anionenaustauscher in der Hydrocarbonat-Form;
b) 17% stark basischer Anionenaustauscher in der Hydroxid-Form;
c) 15% Kationenaustauscher in der H-Form; und
d) einem Wasseranteil von 25%, bezogen auf das Gesamtgewicht des Filtermaterials.

7. Filtermaterial nach einem der vorstehenden Ansprüche, **dadurch gekennzeichnet, dass** es in eine Stützstruktur eingebracht ist.

8. Filtermaterial nach Anspruch 7, **dadurch gekennzeichnet, dass** die Stützstruktur ein retikulierter offenzelliger Polymerschaum ist.

9. Filtermaterial nach Anspruch 7, **dadurch gekennzeichnet, dass** es zwischen einem luftdurchlässigen Träger- und einem luftdurchlässigen Abdeckvlies fixiert wird.

10. Filtermaterial nach Anspruch 7, **dadurch gekennzeichnet, dass** es einseitig oder beidseitig flächig auf ein Stütznetz aufgebracht wird.

11. Filtermaterial nach Anspruch 10, **dadurch gekennzeichnet, dass** es sich bei dem Stütznetz um ein offenmaschiges Netz mit Öffnungen von ungefähr 2 mm handelt.

12. Verfahren zur Herstellung eines Absorptionsfilters, enthaltend das Filtermaterial gemäß einem der Ansprüche 1 bis 11, **gekennzeichnet durch** folgende Schritte:
a) Benetzen eines retikulierten Polyurethan-Schaums mit einem Zweikomponenten-Reaktivkleber; und
b) Aufbringen des Filtermaterials auf die Schaumstruktur.

13. Filterkörper, enthaltend ein Filtermaterial gemäß einem oder mehreren der Ansprüche 1 bis 11.

14. Verwendung des Filterkörpers gemäß Anspruch 13 zur Reinigung von Luftströmen.

## Claims

1. Adsorptive filter material for the adsorption of acids and acid forming substances from the air, comprising an ion exchange material comprising
a) a ratio of at least 60% of a strong alkaline ion exchange resin in the hydrogencarbonate form; and
b) a ratio of not more than 15% of a cation exchange resin in the H-Form.

2. Adsorptive filter material according to claim 1, **characterized in that** it additionally contains a ratio of less than 20% of the exchange resin in the hydroxide form.

3. Filter material according to claim 1 or 2, **characterized in that** the material exhibits a water content ratio of 20 - 40%, bound in a polymer matrix.

4. Filter material according to one of the preceding claims, **characterized in that** the ion exchange material is present in spherical or fiber form.

5. Filter material according to claim 4, **characterized in that** the spheres exhibit an average diameter of 0.5 - 0.8 mm.

6. Filter material according to one of the preceding claims, **characterized in that** it comprises
a) 68% of a strong alkaline anion exchange resin in the hydrocarbonate form;
b) 17% of a strong alkaline anion exchange resin in the hydroxide form;
c) 15% of a cation exchange resin in the H-form; and
d) a water content ratio of 25% based on the total weight of the filter material.

7. Filter material according to one of the preceding claims, **characterized in that** it is incorporated into a supporting structure.

8. Filter material according to claim 7, **characterized in that** the supporting structure is a reticulated open celled polymer foam.

9. Filter material according to claim 7, **characterized in that** it is affixed between an air permeable carrier non-woven and an air permeable cover non-woven.

10. Filter material according to claim 7, **characterized in that** it is applied two-dimensionally on one side or on both sides of a support net.

11. Filter material according to claim 10 **characterized in that** the support net is an open meshed net having openings of about 2 mm.

12. Process for the fabrication of an absorption filter comprising the filter material according to any one of claims 1 to 11 **characterized by** the following steps:
a) wetting a reticulated polyurethane form with a two component reactive adhesive; and
b) applying the filter material on to the foam structure.

13. Filter body, comprising the filter material according to one or more of claims 1 to 11.

14. Usage of the filter body according to claim 13 for cleaning of air streams.

## Revendications

1. Matériau de filtrage adsorbant, destiné à adsorber des acides et des acidificateurs issus de l'air, contenant un matériau échangeur d'ions, **caractérisé en ce que** le matériau échangeur d'ions est composé de :
a) une proportion d'au moins 60 % d'un échangeur d'anions très basique sous la forme hydrogénocarbonate ; et
b) une proportion de 15 % maximum d'un échangeur de cations sous la forme H.

2. Matériau de filtrage adsorbant selon la revendication 1, **caractérisé en ce qu'**il contient en plus une proportion de 20 % maximum d'un échangeur d'ions sous la forme hydroxyde.

3. Matériau de filtrage adsorbant selon la revendication 1 ou 2, **caractérisé en ce que** le matériau comporte une teneur en eau comprise entre 20 et 40 %, liée dans la matrice polymère.

4. Matériau de filtrage selon l'une des revendications précédentes, **caractérisé en ce que** le matériau échangeur d'ions est présent sous la forme de billes ou de fibres.

5. Matériau de filtrage selon la revendication 4, **caractérisé en ce que** les billes ont un diamètre moyen compris entre 0,5 et 0,8 mm.

6. Matériau de filtrage selon l'une des revendications précédentes, **caractérisé en ce qu'**il est composé de
a) 68 % d'échangeur d'anions très basique sous la forme hydrogénocarbonate ;
b) 17 % d'échangeur d'anions très basique sous la forme hydroxyde ;
c) 15 % d'échangeur de cations sous la forme H ; et
d) une teneur en eau de 25 % rapporté au poids total du matériau de filtrage.

7. Matériau de filtrage selon l'une des revendications précédentes, **caractérisé en ce qu'**il est introduit dans une structure de support.

8. Matériau de filtrage selon la revendication 7, **caractérisé en ce que** la structure de support est une mousse polymère réticulée à pores ouverts.

9. Matériau de filtrage selon la revendication 7, **caractérisé en ce qu'**il est fixé entre un non-tissé de support perméable à l'air et un non-tissé de recouvrement perméable à l'air.

10. Matériau de filtrage selon la revendication 7, **caractérisé en ce qu'**il est déposé sur une face ou sur les deux faces à plat sur un réseau de support.

11. Matériau de filtrage selon la revendication 10, **caractérisé en ce que** le réseau de support est un réseau à mailles ouvertes avec des ouvertures de 2 mm environ.

12. Procédé de fabrication d'un filtre d'adsorption contenant le matériau de filtrage selon l'une des revendications 1 à 11, **caractérisé par** les étapes suivantes :
a) mouillage d'une mousse polyuréthane réticulée avec une colle réactive à deux composants ; et
b) application du matériau de filtrage sur la structure de mousse.

13. Corps de filtrage contenant un matériau de filtrage selon une ou plusieurs des revendications 1 à 11.

14. Utilisation du corps de filtrage selon la revendication 13 pour l'épuration des flux d'air.
